# EUROPEAN PATENT SPECIFICATION

(11) **EP 4 379 263 B1**
(45) Date of publication and mention of the grant of the patent: **21.01.2026**
(21) Application number: 23209433.4
(22) Date of filing: 13.11.2023
(51) Int. Cl.: F23R 3/28

(54) **NOZZLE ASSEMBLY, COMBUSTOR, AND GAS TURBINE INCLUDING SAME**
DÜSENANORDNUNG, BRENNKAMMER UND GASTURBINE DAMIT
ENSEMBLE BUSE, CHAMBRE DE COMBUSTION ET TURBINE À GAZ COMPRENANT CELUI-CI

(30) Priority: 30.11.2022 KR 20220164595
(43) Date of publication of application: 05.06.2024
(73) Proprietor: Doosan Enerbility Co., Ltd., Seongsan-gu Changwon-si, Gyeongsangnam-do 51711 (KR)
(72) Inventor: Kim, Hokeun, Daejeon (KR); Jeong, Hanjin, Hanam-si (KR); Bae, Taewon, Gimhae-si (KR)
(74) Representative: Ter Meer Steinmeister & Partner

(56) References cited:
- US-A1- 2014 053 571
- US-A1- 2020 158 343
- US-A1- 2022 228 741
- US-B1- 8 438 851

## Description

The present application claims priority to Korean Patent Application No. 10-2022-0164595, filed on November 30, 2022.

### BACKGROUND OF THE INVENTION

### Field of the Invention

Embodiments of the present disclosure relate to a nozzle assembly, a combustor including the nozzle assembly, and a gas turbine including the nozzle assembly or including the combustor including the nozzle assembly. More particularly, embodiments of the present disclosure relate to a nozzle assembly, a combustor including the nozzle assembly, and a gas turbine including the nozzle assembly or including the combustor including the nozzle assembly. The nozzle assembly having a nozzle tip cooling structure.

### Description of the Background Art

A turbo machine refers to an apparatus that generates a driving force used to generate electric power, but not limited thereto, by using fluid (e.g., gas) passing through the turbo machine. To generate electric power, such a turbo machine is usually installed and used together with a generator. A gas turbine, a steam turbine, a wind power turbine, and so on may correspond to the turbo machine. The gas turbine is an apparatus that generates combustion gas by mixing compressed air and natural gas and by combusting the mixture, and generates a driving force for generation of electric power by using the combustion gas. The steam turbine is an apparatus that heats water to generate steam and generates a driving force for generation of electric power by using the steam. A wind turbine is an apparatus that converts wind power into a driving force for generation of electric power.

In such a turbo machine, the gas turbine includes a compressor, a combustor, and a turbine. The compressor includes a plurality of compressor vanes and a plurality of compressor blades which are alternately provided in a compressor casing. In addition, the compressor is configured to intake external air through a compressor inlet scroll strut. The intaken air is compressed by the compressor vanes and the compressor blades while passing through the compressor. The combustor receives compressed air compressed in the compressor, and mixes the compressed air with fuel. In addition, the combustor ignites fuel mixed with compressed air by using an igniter, thereby generating high-temperature and high-pressure combustion gas. Such generated combustion gas is supplied to the turbine. The turbine includes a plurality of turbine vanes and a plurality of turbine blades which are alternately provided in a turbine casing. In addition, the turbine receives combustion gas generated at the combustor. The combustion gas passes through the turbine. Combustion gas passing through the turbine rotates the turbine blades, and the combustion gas that has completely passed through the turbine is discharged to an outside of the turbine through a turbine diffuser or a turbine exhaust.

In such a turbo machine, the gas turbine may use hydrogen as fuel by itself or mixed with one or more other fuels. Such a hydrogen gas turbine uses a micromixer or a multi-tube combustor for combusting hydrogen.

When combustion using such a micromixer or a multi-tube combustor is performed, hydrogen is added into the fuel or only hydrogen fuel is combusted so as to reduce carbon emissions. Although this combustion technology prevents flashback with hydrogen fuel, there is an issue of potential flame flashback when a temperature of an outlet end rises. This occurs because flame flashback is sensitive not only to the speed at which the fuel/air mixture is supplied but also to a wall surface temperature of the nozzle through which it is supplied.

US 8 438 851 B1 describes a fuel nozzle assembly for use with a turbine engine. The fuel nozzle assembly includes a plurality of fuel nozzles positioned within an air plenum defined by a casing. Each of the plurality of fuel nozzles is coupled to a combustion liner defining a combustion chamber. Each of the plurality of fuel nozzles includes a housing that includes an inner surface that defines a cooling fluid plenum and a fuel plenum therein, and a plurality of mixing tubes extending through the housing. Each of the mixing tubes includes an inner surface defining a flow channel extending between the air plenum and the combustion chamber. At least one mixing tube of the plurality of mixing tubes including at least one cooling fluid aperture for channeling a flow of cooling fluid from the cooling fluid plenum to the flow channel.

US 2014/053571 A1 presents a cooling circuit of a gas turbine that passes an airflow through a combustor section that includes a plurality of mixing tubes for transporting a fuel/air mixture and a perforated plate including a plurality of impingement holes and a plurality of tube holes for accommodating the mixing tubes. The tube holes and the mixing tubes form a plurality of annulus areas between the perforated plate and the mixing tubes. The impingement holes and the annulus areas are configured to pass the airflow through the perforated plate. A flow management device modifies an effective size of the annulus areas to control a distribution of the airflow through the impingement holes and the annulus areas of the perforated plate to enhance cooling efficiency.

US 2022/228741 A1 presents a nozzle assembly for injecting fuel and compressed air into a combustion chamber of a gas turbine combustor. The nozzle assembly includes a nozzle body disposed in the combustor and having a coolant outlet on one end of which an inside of the nozzle body communicates with the combustion chamber, a spray nozzle disposed in the nozzle body and including a plurality of first nozzle tubes each having a first flow path formed therein to allow combustion air to flow into the combustion chamber and a fuel hole formed to supply fuel, and a second nozzle tube having through-holes to allow the first nozzle tubes to pass therethrough and a second flow path formed to supply fuel, and a diaphragm disposed inside of the nozzle body and including a plurality of coolant flow holes through which a coolant supplied to the nozzle body is supplied towards one end of the nozzle body and a plurality of tube holes through which the first nozzle tubes pass.

US 2020/158343 A1 presents a fuel nozzle for a gas turbine engine. The fuel nozzle includes an outer sleeve extended circumferentially around a fuel nozzle centerline and extended along a longitudinal direction substantially co-directional to the fuel nozzle centerline. The outer sleeve defines a plurality of first radially oriented air inlet ports through the outer sleeve in circumferential arrangement relative to the fuel nozzle centerline. The fuel nozzle further includes a centerbody positioned radially inward of the outer sleeve. The centerbody is extended along the longitudinal direction substantially co-directional to the fuel nozzle centerline and wherein the centerbody is concentric to the fuel nozzle centerline and the outer sleeve. The centerbody defines a plurality of second radially oriented air inlet ports through the centerbody in circumferential arrangement relative to the fuel nozzle centerline. The centerbody further defines an annular centerbody groove or depression relative to the fuel nozzle centerline at a downstream end directly adjacent to a combustion chamber. The fuel nozzle further includes an inner sleeve extended circumferentially around the fuel nozzle centerline and extended along the longitudinal direction substantially co-directional to the fuel nozzle centerline. The inner sleeve is positioned radially between the outer sleeve and the centerbody. The inner sleeve further defines an annular inner sleeve depression relative to the fuel nozzle centerline at the downstream end directly adjacent to the combustion chamber. The outer sleeve and the inner sleeve together define a first fuel air mixing passage radially therebetween and extended substantially along the longitudinal direction in direct fluid communication with the combustion chamber. The inner sleeve and the centerbody together further define a second fuel air mixing passage radially therebetween and extended substantially along the longitudinal direction in direct fluid communication with the combustion chamber.

### SUMMARY OF THE INVENTION

Accordingly, the present disclosure has been made keeping in mind the above problems occurring in the related art, and an objective of the present disclosure is to provide a nozzle assembly, a combustor, a gas turbine configured such that cooling air is supplied between injection nozzles, thereby preventing flame flashback from occurring.

The technical problems that are intended to be addressed in the present disclosure are not restricted to the above-described problems, and other problems, which are not mentioned herein, could be clearly understood by those of ordinary skill in the art from details described below.

One or more objects are achieved by the invention set out by the features of the independent claim.

According to a first aspect of the present disclosure, there is provided a nozzle assembly for discharging fuel and compressed air into a combustion chamber of a combustor of a gas turbine, the nozzle assembly comprising: a nozzle body defining an accommodation space; a plurality of injection nozzles disposed in the accommodation space of the nozzle body and spaced apart from each other, each of the plurality of injection nozzles comprising: one or more nozzle inlets for receiving the fuel and a first portion of the compressed air, an inner channel for receiving the fuel and the first portion of the compressed air from the one or more nozzle inlets and for flow of the fuel and the first portion of the compressed air therethrough, and a nozzle outlet for discharging the fuel and the first portion of the compressed air flowing through the inner channel. The nozzle assembly further comprises a side panel (also referred to as side wall or downstream-end panel or downstream panel) connected to a first side of the nozzle body, wherein the injection nozzles pass through the side panel such that the nozzle outlets of the injection nozzles are disposed at the side panel. The nozzle body comprises a cooling air inlet hole configured to receive a second portion of the compressed air therethrough into the accommodation space of the nozzle body for cooling the plurality of injection nozzles disposed in the accommodation space of the nozzle body. The side panel comprises a cooling air outlet hole for discharging the second portion of the compressed air from the accommodation space of the nozzle body.

According to a second aspect of the present disclosure, there is provided a nozzle assembly configured to discharge fuel and compressed air into a combustion chamber of a combustor of a gas turbine, the nozzle assembly including: a nozzle body; a plurality of injection nozzles provided inside the nozzle body and disposed to be spaced apart from each other, the plurality of injection nozzles having inner portions or channels through which the fuel and a first portion of the compressed air are mixed and flow; and a side wall (hereinafter also referred to as the side panel or downstream panel or downstream-end panel) which is connected to a first side of the nozzle body and through which the plurality of injection
nozzles passes, wherein a cooling air inlet hole into which a second portion of the compressed air is introduced, as a cooling air, into a space where the plurality of injection nozzles is disposed is formed in the nozzle body, and a cooling air outlet hole through which the cooling air introduced from the cooling air inlet hole is discharged is formed in one region of the side wall.

According to a third aspect of the present disclosure, a combustor for a gas turbine is provided, wherein the combustor includes the nozzle assembly of the first aspect or the second aspect.

According to a fourth aspect of the present disclosure, a gas turbine is provided, wherein the gas turbine includes the nozzle assembly of the first aspect or the second aspect.

According to a fifth aspect of the present disclosure, a gas turbine is provided, wherein the gas turbine includes the combustor of the third aspect.

According to a sixth aspect of the present disclosure, there is provided a combustor configured to mix compressed air supplied from a compressor of a gas turbine with fuel and to combust a mixture of the compressed air and the fuel, the combustor being configured to supply a generated combustion gas to a turbine of the gas turbine, and the combustor including: a nozzle casing; a liner connected to an end portion of the nozzle casing, the liner having an inner portion provided with a combustion chamber in which the mixture of the compressed air and the fuel is combusted; a transition piece connected to an end portion of the liner, the transition piece being configured to supply the combustion gas generated from the combustion chamber to the turbine; and a nozzle assembly mounted inside the nozzle casing and configured to discharge the fuel and the compressed air into the combustion chamber, wherein the nozzle assembly includes: a nozzle body; a plurality of injection nozzles provided inside the nozzle body and disposed to be spaced apart from each other, the plurality of injection nozzles having inner portions or channels through which the fuel and a first portion of the compressed air are mixed and flow; and a side wall (also referred to as side panel or downstream-end panel or downstream panel) which is connected to a first side of the nozzle body and through which the plurality of injection nozzles passes, wherein a cooling air inlet hole into which a second portion of the compressed air is introduced, as a cooling air, into a space where the plurality of injection nozzles is disposed is formed in the nozzle body, and a cooling air outlet hole through which the cooling air introduced from the cooling air inlet hole is discharged is formed in one region of the side.

According to a seventh aspect of the present disclosure, there is provided a gas turbine including: a compressor configured to compress air introduced from outside; a combustor configured to mix compressed air supplied from the compressor with fuel and to combust a mixture of the compressed air and the fuel; and a turbine configured to generate power for generating electric power by passing combustion gas supplied from the combustor to an inner portion of the turbine, wherein the combustor includes: a nozzle casing; a liner connected to an end portion of the nozzle casing, the liner having an inner portion or channels provided with a combustion chamber in which the mixture of the compressed air and the fuel is combusted; a transition piece connected to an end portion of the liner, the transition piece being configured to supply the combustion gas generated from the combustion chamber to the turbine; and a nozzle assembly mounted inside the nozzle casing and configured to discharge the fuel and the compressed air into the combustion chamber, wherein the nozzle assembly includes: a nozzle body; a plurality of injection nozzles provided inside the nozzle body and disposed to be spaced apart from each other, the plurality of injection nozzles having inner portions or channels through which a first portion of the compressed air are mixed and flow; and a side wall (also referred to as side panel or downstream-end panel or downstream panel) which is connected to a first side of the nozzle body and through which the plurality of injection nozzles passes, wherein a cooling air inlet hole into which a second portion of the compressed air is introduced, as a cooling air, into a space where the plurality of injection nozzles is disposed is formed in the nozzle body, and a cooling air outlet hole through which the cooling air introduced from the cooling air inlet hole is discharged is formed in one region of the side wall.

In the present disclosure, in its entirety, the side wall may also be referred to as the side panel or downstream panel or downstream-end panel.

One or more of the above-mentioned first to seventh aspects may include one or more of the following.

The side wall is provided with a guide portion that protrudes inside the nozzle body, and first sides of the injection nozzles are inserted into the guide portion.

The guide portion may be disposed such that the guide portion has a region that is spaced apart from outer surfaces of the injection nozzles.

The cooling air outlet hole is formed in one region of the guide portion.

The guide portion may be disposed such that one region of the guide portion is in contact with the injection nozzles.

An inner end portion of the guide portion may have elasticity.

The cooling air outlet hole may include a plurality of cooling air outlet holes, and the plurality of cooling air outlet holes may be formed in the inner end portion of the guide portion along a longitudinal direction of the guide portion.

A cross-section of the guide portion may have a shape that is same as a cross-section of the injection nozzles.

The present disclosure provides one or more of the following effects.

The injection nozzles may be cooled, which may have the advantage of protecting them from thermal damage/stress and may also help in preventing flame flashback.

Flame flashback may also be prevented by cooling tip portions of the plurality of injection nozzles of the combustor.

Assembly of the plurality of injection nozzles may be facilitated.

Various other advantages and effects of the present disclosure are not limited to the above, and will be more easily understood in the course of describing specific embodiments of the present disclosure.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a cross-sectional view illustrating a gas turbine according to the present disclosure;
FIG. 2 is a view schematically illustrating a combustor, for example which may be optionally included in the gas turbine illustrated in FIG. 1;
FIG. 3 is a view illustrating a configuration of a fuel nozzle assembly which is not in line which the invention as defined by the claims;
FIG. 4 is a view illustrating an embodiment of the nozzle assembly according to the invention as defined by the claims;
FIG. 5 is a view illustrating a third embodiment of the nozzle assembly for example which may be optionally included in the gas turbine illustrated in FIG. 1 or optionally included in a combustor illustrated in FIG. 2; and
FIG. 6 is an enlarged view of the nozzle assembly illustrated in FIG. 5.

### DETAILED DESCRIPTION OF THE INVENTION

Hereinafter, exemplary embodiments of the present disclosure will be described in detail with reference to the accompanying drawings.

However, the scope of the present disclosure is not limited to one or some or all of the described embodiments, but may be implemented in various different forms, and as long as it is within the scope of the appended claims. One or more of the elements may be selectively combined and substituted between the embodiments.

Terms (including technical and scientific terms) used in the embodiments of the present disclosure may be generally understood by those of ordinary skilled in the art to which the present disclosure belongs, unless specifically defined and described explicitly, and terms commonly used, such as terms defined in the dictionary, may be interpreted in consideration of the contextual meaning of the related art.

The terms used in the embodiments of the present disclosure are for describing the embodiments, and are not intended to limit the present disclosure.

In this specification, a singular form may also include a plural form unless otherwise specifically indicated, and when it is described as 'at least one (or one or more) of A and (with) B, C', it may include one or more of all possible combinations of A, B, and C.

In describing the components of the embodiment of the present disclosure, terms such as first, second, A, B, (a), (b), and so on may be used. These terms are only for distinguishing the component from other components, and are not limited to the essence, order, or sequence of the component by the terms.

When one component is referred to as being 'connected', 'coupled', or 'contacted' to another component, it should be understood that the component may be directly connected, coupled, or contacted to the other component or may be 'connected', 'coupled', or 'contacted' to the other component via another component therebetween.

When one component is referred to as being formed or disposed on 'upper (above) or lower (below)' of each component, the upper (above) or lower (below) includes not only the case where two components are in direct contact with each other, but also a case where one or more other components are formed or disposed between the two components. When expressed as 'upper (above) or lower (below)', the meaning of not only the upper direction but also the lower direction based on one component may be included.

Hereinafter, embodiments of the present disclosure will be described in detail with reference to the accompanying drawings, and in the description with reference to the accompanying drawings, the same or corresponding components may be given the same reference numbers, and an overlapped description therewith will be omitted.

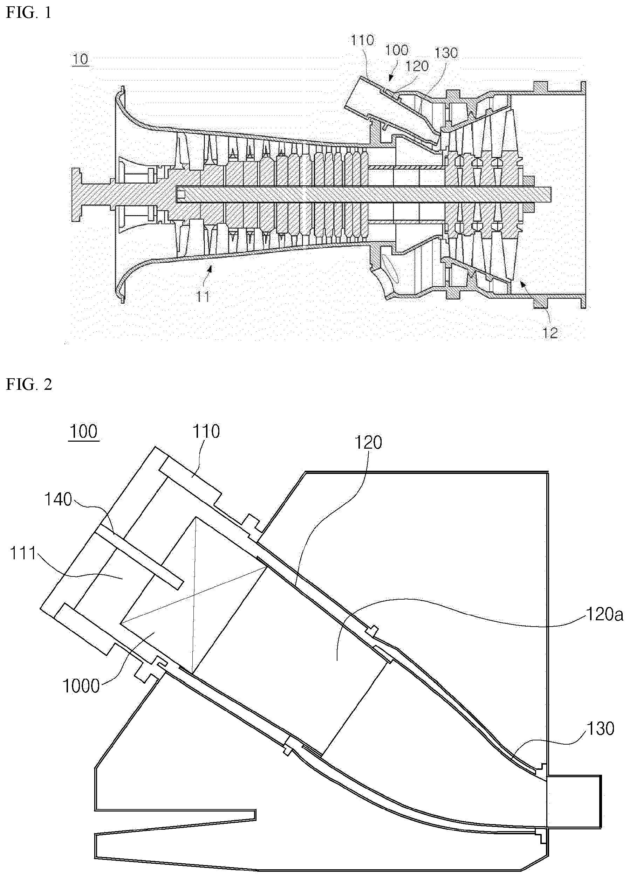

FIGS. 1 to 6 are intended to provide conceptual and clear understanding of the main features of the present disclosure. As a result, various modifications of the drawings are expected, and the scope of the present disclosure should not be limited to particulars, e.g. shapes, depicted in the drawings.

Referring to FIG. 1, a gas turbine 10 of the present disclosure includes a compressor 11, a combustor 100, and a turbine 12.

On the basis of a flow direction of gas (compressed air or combustion gas), the compressor 11 is disposed at an upstream side of the gas turbine 10, the turbine 12 is disposed at a downstream side of the gas turbine 10, and the combustor 100 is disposed between the compressor 11 and the turbine 12.

The compressor 11 accommodates compressor vanes and compressor rotors (e.g. including rotor disks along with the compressor blades arranged thereon) in (e.g. housed inside) a compressor casing, and the turbine 12 accommodates turbine vanes and turbine rotors (e.g. including rotor disks along with the turbine blades arranged thereon) in (e.g. housed inside) a turbine casing. The compressor vanes and the compressor rotors are disposed in a multi-stage structure along the flow direction of compressed air, and the turbine vanes and the turbine rotors are also disposed in a multi-stage structure along the flow direction of combustion gas.

Here, the compressor 11 is designed such that an internal space thereof is gradually decreased in size from a front stage to a rear stage so that air intaken into the compressor 11 can be compressed. In contrast, the turbine 12 is designed such that an internal space thereof is gradually increased in size from a front stage to a rear stage so that combustion gas supplied from the combustor 100 can expand.

Meanwhile, a torque tube is disposed between the compressor rotor that is positioned at the rearmost stage of the compressor 11 and the turbine rotor that is positioned at the foremost stage of the turbine 12 and functions as a torque transmission member for transmitting rotational torque generated from the turbine 12 to the compressor 11.

As illustrated in FIG. 1, the torque tube may include a plurality of torque tube disks arranged in a multiple-stage structure, e.g., three-stage structure, but this is only one of various embodiments of the present disclosure. Furthermore, the torque tube may include a plurality of torque tube disks arranged in a structure of equal to or more than four stages or a structure of equal to or less than two stages.

Each compressor rotor includes a compressor disk and compressor blades. In the compressor casing, a plurality (e.g., fourteen) of compressor disks is provided, and each of the compressor disks is coupled to a tie rod such that the compressor disks are not spaced apart from each other in an axial direction.

In more detail, with the tie rod passing through each center portion of the compressor disks, each of the compressor disks is arranged along the axial direction. The compressor disks adjacent to each other are disposed such that facing surfaces of adjacent compressor disks are pressed by the tie rod so that the adjacent compressor disks cannot independently rotate.

A plurality of compressor blades is radially coupled to an outer circumferential surface of each of the compressor disks.

A plurality of compressor vanes which is mounted on an inner circumferential surface of the compressor casing and which is formed in an annular shape is disposed between the compressor blades on the basis of respective stages.

Unlike the compressor disks, the compressor vanes are in a fixed state such that the compressor vanes do not rotate. Furthermore, the compressor vanes are configured to align a flow of compressed air that has passed through the compressor blades which are positioned at the upstream side, and are configured to guide the compressed air to the compressor blades which are positioned at the downstream side.

Here, in order to distinguish the compressor casing and the compressor vanes from the compressor rotors, the compressor casing and the compressor vanes may be collectively referred to as a compressor stator.

The tie rod is disposed such that the tie rod passes through center portions of the plurality of compressor disks and center portions of the turbine disks that will be described later. Furthermore, a first side end portion of the tie rod is fastened to an inside of the compressor disk that is positioned at the foremost side of the compressor 11, and a second side end portion of the tie rod is fastened by a fixing nut.

A shape of the tie rod is not limited to the shape illustrated in FIG. 1, and the tie rod may be formed in various structures according to the gas turbine. That is, it is possible to have a design where a single tie rod passes through the center portions of both the compressor disks and the turbine disks. Alternatively, it is also possible to have multiple tie rods arranged in a circumferential direction, or a combination of the these two approaches.

Although not illustrated, a deswirler may be mounted in the compressor 11 of the gas turbine 10 and functions as a guide vane. The deswirler may be configured to increase a pressure of fluid flowing into an inlet of the combustor 100 and is configured to adjust a flow angle of the fluid to a designed flow angle.

The combustor 100 mixes introduced compressed air with fuel and combusts the fuel mixture to generate high-temperature and high-pressure combustion gas having high energy. The temperature of the combustion gas is increased through an isobaric combustion process to a heat-resistant temperature limit that components of the combustor 100 and the turbine 12 can endure.

The combustor 100 constituting a combustion system of the gas turbine 10 may include a plurality of combustors 100 arranged in a combustor casing formed in a cell shape. Each of the combustors 100 includes a nozzle assembly 1000 for ejecting fuel, a liner 120 forming or defining a combustion chamber 120a, and a transition piece 130, arranged downstream of the liner 120, serving as a connection portion between the combustor 100 and the turbine 12.

Specifically, the liner 120 provides a combustion space, i.e. the combustion chamber 120a, in which fuel ejected from the nozzle assembly 1000 is mixed with compressed air from the compressor 11 and then combusted. Alternatively or additionally, the fuel is pre-mixed with compressed air and the pre-mixed fuel-air mixture is ejected from the nozzle assembly 1000 into the combustion chamber 120a. Surrounded by the liner 120, the combustion chamber 120a is formed and provides the combustion space in which the fuel mixed with air is combusted. The liner 120 may have a double walled or double sleeved structure. In the liner 120, a liner annular channel is formed between an inner wall/sleeve and an outer wall/sleeve, the liner annular channel having a shape of an annular space surrounding the combustion chamber 120a.

The nozzle assembly 1000 for ejecting fuel is coupled to a front or upstream end (with respect to the flow direction of combustion gas or products) of the liner 120, and an igniter is coupled to the liner 120, for example to a (inner) side wall of the liner 120.

Compressed air, coming from the compressor, is introduced into the liner, for example through a plurality of holes formed in the outer wall of the liner 120 or through an inlet of the and the liner annular channel, and flows in the liner annular channel towards the nozzle assembly 1000. Furthermore, compressed air used to cool the transition piece 130 that will be described later may also flow through the liner annular channel.

As such, since compressed air flows along the inner and outer wall portions of the liner 120, the liner 120 may be protected from thermal damages caused by heat generated during fuel combustion in the combustion chamber 120a.

The transition piece 130 is connected to a rear end of the liner 120 to facilitate the transfer of combustion gas, ignited by an ignition plug, toward the turbine 12.

Similar to the liner 120, the transition piece 130 has a transition piece annular channel surrounding an internal space of the transition piece 130. The transition piece annular channel is formed between an inner wall and outer wall of the transition piece 130. Furthermore, the inner and outer walls of the transition piece 130 are cooled by compressed air flowing along the transition piece annular channel so that the transition piece 130 is protected from thermal damages caused by high-temperature of the combustion gas.

Meanwhile, the high-temperature and high-pressure combustion gas discharged from the combustor 100 is supplied into the turbine 12 that is described above. High-temperature and high-pressure combustion gas supplied into the turbine 12 expands while passing through an inner portion of the turbine 12, thereby applying impulsive force and reaction force to turbine blades so that rotational torque is generated. The rotational torque obtained in this manner is transmitted to the compressor 11 via the torque tube described above, and an additional rotation torque in excess of the torque required to drive the compressor 11 is used to drive a generator and so on.

The turbine 12 basically has a structure similar to that of the compressor 11. That is, the turbine 12 is also provided with a plurality of turbine rotors similar to the compressor rotors of the compressor 11. Therefore, each turbine rotor 14 also includes a turbine disk and a plurality of turbine blades radially disposed around the turbine disk.

A plurality of turbine vanes which is mounted in the turbine casing and which is disposed in an annular shape is provided between the turbine blades on the basis of respective stages. Furthermore, the turbine vanes guide the flow direction of the combustion gas passing through the turbine blades. Here, in order to distinguish the turbine casing and the turbine vanes from the turbine rotor, the turbine casing and the turbine vanes may be collectively referred to as a turbine stator.

The combustor 100, as for example shown in FIG 2, that is a component of the gas turbine 10 according to an embodiment of the present disclosure may include a nozzle casing 110, the liner 120, the transition piece 130, a fuel supply pipe 140, and the nozzle assembly 1000.

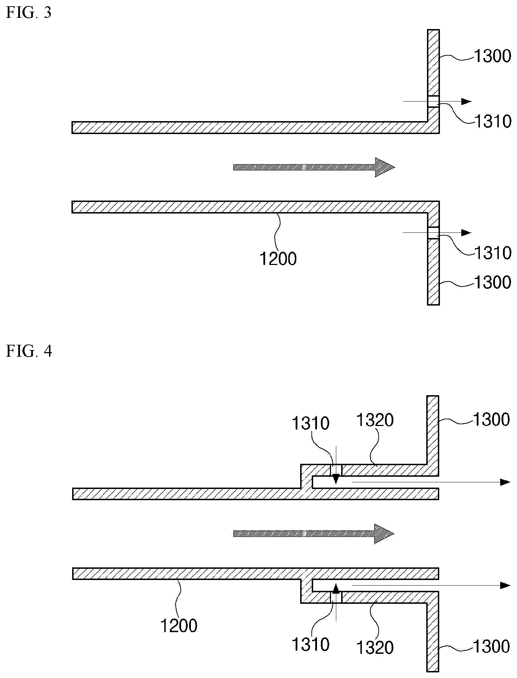

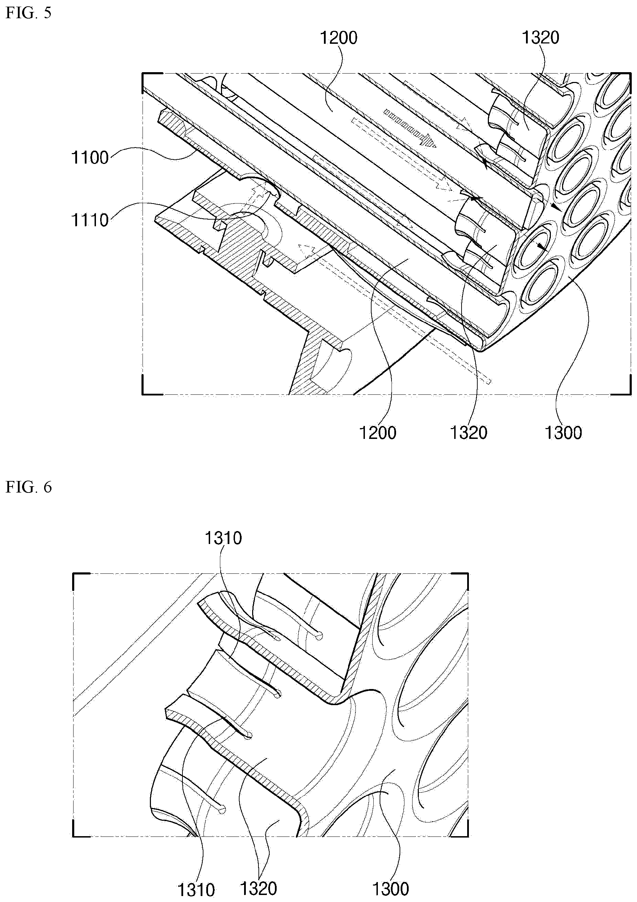

The nozzle casing 110 includes an inside 111 or space 111 inside of the casing which is supplied with compressed air from the compressor 11, and a portion, i.e. a first portion, of the compressed air, so supplied, is mixed with fuel in the nozzle assembly 1000, more particularly in inner channels of injection nozzles 1200 of the nozzle assembly 1000 and then supplied to the combustion chamber 120a (see FIG. 5 hatched arrow). Another portion, i.e. a second portion, or a remaining portion, i.e. a second portion, of the compressed air, so supplied, may be used for cooling the outsides of the injection nozzles 1200 of the nozzle assembly 1000, (see FIG. 5 dotted line un-hatched arrow inside the nozzle body 1100) for example outsides of outlet ends of the injection nozzles 1200 of the nozzle assembly 1000. The second portion of the compressed air may not enter the inside of the injection nozzles 1200, and may not be mixed with the fuel flowing through the injection nozzles 1200, but instead may be directly exited into the combustion chamber 120a by the cooling air outlet holes 1310 (shown in FIGs 3 - 6, and described later).

The liner 120 is connected to a downstream side of the nozzle casing 110 on the basis of the flow direction of compressed air or combustion gas, and the combustion chamber 120a is formed inside the liner 120. The mixed fluid (generated by mixing compressed air with fuel), ejected from the nozzle assembly 1000, is combusted in the combustion chamber 120a.

The transition piece 130 is connected to a downstream side of the liner 120. The transition piece 130 is configured to supply the combustion gas generated in the combustion chamber 120a of the liner 120 to the turbine 12.

The fuel supply pipe 140 is provided at an inner center of the nozzle casing 110, and is configured to guide the fuel supplied from the outside to be moved inside the nozzle casing 110. At this time, the supplied fuel may be hydrogen, but is not limited thereto.

The nozzle assembly 1000 is connected to a first side of the fuel supply pipe 140. In the nozzle assembly 1000, compressed air introduced through the nozzle casing 110 and fuel introduced through the fuel supply pipe 140 are mixed with each other in a plurality of injection nozzles 1200, and then are discharged as a mixed fluid into the combustion chamber 120a.

Referring to FIGS. 3 to 6, the nozzle assembly 1000 includes a nozzle body 1100 defining an accommodation space, the injection nozzles 1200, and a side wall 1300 (may also be referred to as downstream end panel or downstream panel of the nozzle assembly i.e. a wall or plate or perforated plate disposed at the downstream side or downstream end of the nozzle assembly).

The injection nozzles 1200 are formed elongated toward the combustion chamber 120a and are perpendicular to the combustion chamber 120a. The side wall 1300 is formed at the downstream end of the injection nozzles 1200 and defines the upstream end of combustion chamber 120a based on the flow direction of the air-fuel mixture in the injection nozzles 1200. Thus, the side wall 1300 is formed perpendicular to the direction in which the injection nozzles 1200 is elongated. The direction in which the injection nozzles 1200 is elongated may be referred to as an axial direction or longitudinal direction. Throughout the specification, in the axial direction, the downstream direction and downstream end means the axial direction toward the combustion, and the upstream direction and the upstream end are the opposite direction to the downstream direction and downstream end.

The nozzle body 1100 provides a disposition space or accommodation space (may be referred to as a cooling air plenum) in which the plurality of injection nozzles 1200 are positioned, and provides a space through which compressed air is moved therein or flows therethrough. There is no limitation in a shape of the nozzle body 1100, and various structures for fixing the injection nozzles 1200 may be provided.

As an embodiment, the nozzle body 1100 may be provided in a cylindrical structure e.g. hollow tubular or hollow cylindrical structure. A cooling air inlet hole 1110 is formed in the nozzle body 1100, for example on the side wall of the nozzle body 1100 (i.e. on a wall extending in upstream-downstream direction of the nozzle body). This cooling air inlet hole 1110 allows cooling air to be drawn into a space where the injection nozzles 1200 are located

The cooling air inlet hole 1110 refers to a passage through which compressed air, introduced from the liner 120, can flow. A first portion of the compressed air, introduced from the liner 120, flows to and in the inner channels of the injection nozzles 1200, and a second portion (e.g., but not limited thereto, the remaining portion) of the compressed air may flow through the cooling air inlet hole 1110. At this time, the compressed air flowing through the cooling air inlet hole 1110 functions as cooling air by cooling tips of the injection nozzles 1200. The compressed air flowing through the cooling air inlet hole 1110, i.e. the second portion, may not be introduced into the injection nozzles 1200 before it is discharged into the combustion chamber 120a and thus may meet the fuel only after it is discharged into the combustion chamber 120a

The plurality of injection nozzles 1200 is provided inside the nozzle body 1100 and is disposed in the accommodation space to be spaced apart from each other. Each injection nozzle 1200 includes one or more nozzle inlets, an inner channel and a nozzle outlet. The one or more nozzle inlets receive the fuel and a first portion of the compressed air. The inner channel forms a flow path from the one or more nozzle inlets to the nozzle outlet. The inner channel receives the fuel and the first portion of the compressed air from the one or more nozzle inlets, which then flows through the inner channel to the nozzle outlet for discharging the fuel and the first portion of the compressed air. Inside the injection nozzles 1200 (i.e. in a space inside each of the injection nozzles i.e. inner channel), the compressed air and fuel may be mixed with each other and may flow towards the nozzle outlet of the injection nozzle to be discharged into the combustion space 120a.

As an embodiment, the injection nozzle 1200 may have a cylindrical structure. However, the injection nozzles 1200 may have various structures/shapes.

The side wall 1300 is connected to a first side (i.e., downstream end) of the nozzle body 1100, and may be disposed such that the injection nozzles 1200 penetrate the side wall 1300. At this time, a cooling air outlet hole 1310, through which the cooling air introduced from the cooling air inlet hole 1110 is discharged, may be formed in the side wall 1300 or in a region of the side wall 1300 (for example as shown in FIG 3).

In order to cool tip areas of the injection nozzles 1200, the cooling air outlet hole 1310 may form a flow of cooling air along the outer surface of the injection nozzles 1200, preferably along downstream end of the outer surface of the injection nozzles 1200. It is preferable that the cooling air outlet hole 1310 is formed adjacent to the injection nozzles 1200 that is fixed to the side wall 1300. The cooling air outlet hole 1310 may be formed to be concentric with and encircle (i.e., surround) the outlet of the injection nozzle 1200.

As an embodiment, when injection nozzles 1200 has a cylindrical shape, a plurality of cooling air outlet holes 1310 may be disposed in a region where the outer periphery portions of the injection nozzles 1200 and the side wall 1300 are connected to each other, and may be disposed in a circumferential direction at downstream end portions of the injection nozzles 1200.

However, there is no limitation in a shape of the cooling air outlet hole 1310. The shape of the cooling air outlet hole 1310 may be modified to various shapes such as a circular shape, a polygonal shape, a slit structure i.e. an elongated shape having a length longer than width, and so on.
A diameter or width of each of the at least one cooling air outlet hole 1310 is smaller than a diameter of each of the nozzle outlets. Additionally or optionally, a distance of each of the at least one cooling air outlet hole 1310 from the nozzle outlet disposed closest to the cooling air outlet hole 1310 may be smaller than a diameter of the nozzle outlet disposed closest to the cooling air outlet hole 1310. Additionally or optionally, a distance of each of the at least one cooling air outlet hole 1310 from the nozzle outlet disposed closest to the cooling air outlet hole 1310 may be smaller than a radius of the nozzle outlet disposed closest to the cooling air outlet hole 1310.

As shown in FIG 4, the side wall 1300 is provided with a guide portion 1320 that protrudes from the side wall 1300 toward the upstream direction inside the nozzle body 1100, and a first side of the injection nozzle 1200 may be inserted into the guide portion 1320.

For example, the side wall 1300 may have a first portion or planar portion disposed substantially perpendicular to longitudinal axes of the injection nozzles 1200, and a guide portion 1320 that protrudes from the first portion toward the upstream direction inside the nozzle body 1100 i.e. into the accommodation space. The guide portion may define an opening in the first portion. The first portion may completely encircle the guide portion 1320. A first side or an outlet end (i.e. an end at which the nozzle outlet is present) of one of the injection nozzles 1200 may be inserted into the guide portion 1320. The first side or the outlet end of the injection nozzle 1200 may be radially spaced apart from an axially extending circumferential wall or part or portion (i.e. tubular shaped) of the guide portion 1320 to define an annular flow space or path or channel encircling the first side or the outlet end of the injection nozzle 1200. Optionally, the first portion may be planar. Optionally, the guide portion 1320 may have a radially extending wall or part or portion (i.e. disc shaped) extending radially inwards from the circumferential wall of the guide portion 1320 towards the injection nozzle 1200. Optionally, the radially extending wall of the guide portion 1320 may be connected to the injection nozzle 1200, thereby forming a contact region or part or portion. The contact region may close the annular flow space (or path or channel) encircling the first side or the outlet end of the injection nozzle 1200 at an upstream side or end of the annular flow space or path or channel.

The first side or the outlet end may be defined as a portion of the injection nozzle starting from the nozzle outlet and extending upto less than 50 percent of a total length injection nozzle, i.e. a length from the nozzle outlet to the nozzle inlet, for example the first side or the outlet end may be defined as a portion of the injection nozzle starting from the nozzle outlet and extending upto less than 30 percent of the total length injection nozzle, or extending upto less than 20 percent of the total length injection nozzle or extending upto less than 10 percent of the total length injection nozzle. Less than 20 percent is more in reducing tip (nozzle outlet) temperature (compared to entire nozzle length cooling) and less than 10 percent is most effective in reducing tip temperature.

The guide portion 1320 has a structure in which the first side or the outlet end of the injection nozzle 1200 is inserted thereinto, and has a structure that protrudes inside the nozzle body 1100. Furthermore, the cooling air outlet hole 1310 may be formed in a region of the guide portion 1320, for example in the axially extending circumferential wall or part or portion (i.e. tubular shaped) of the guide portion 1320.

Optionally, the cooling air outlet hole 1310 may extend radially towards the first side or the outlet end the injection nozzle 1200. Optionally, the cooling air outlet hole 1310 may extend radially towards the first side or the outlet end the injection nozzle 1200, perpendicular to the longitudinal axis of the injection nozzles 1200 or may be formed inclined (for example forming an acute angle) to the longitudinal axis of the injection nozzles 1200, i.e. inclined towards the outlet or exit of the injection nozzle 1200 or inclined towards the combustion chamber/space 120a.

The cooling air outlet hole 1310 is formed in the guide portion 1320 for receiving the cooling air in a space between the guide portion 1320 and the first side of the injection nozzle 1200. The guide portion 1320 comprises an outlet or guide portion outlet for discharging the cooling air from the space between the guide portion 1320 and the first side of the injection nozzle 1200.

The guide outlet or guide portion outlet may be disposed adjacent to the nozzle outlet.

The guide outlet or guide portion outlet may be disposed encircling the nozzle outlet.

The guide outlet or guide portion outlet may be disposed at the first portion or planar portion of the side panel.

The guide portion 1320 may be generally in a cylindrical shape elongated in the axial direction while encircling the injection nozzle 1200 and having a same axis or is coaxial with the injection nozzle 1200.

The guide portion 1320 is disposed such that certain region (i.e. the contact region) of the guide portion 1320 is in contact with the injection nozzle 1200 to stably support the injection nozzle 1200 and facilitate connection between the side wall 1300 and the injection nozzle 1200.

The guide portion 1320 may have a region (i.e. circumferential region) that is spaced apart from an outer surface of the injection nozzle 1200. At this time, the cooling air outlet hole 1310 may be formed in a region inside a portion of the guide portion 1320 that protrudes radially inward, toward the central axis of the injection nozzle 1200 i.e. in the contact region.

The region where the guide portion 1320 and the injection nozzle 1200 are spaced apart from each other (i.e. circumferential region) is functioning as a cooling air moving passage in which cooling air is capable of moving directly along the outer surface of the injection nozzle 1200.

That is, one region i.e. contact region of the guide portion 1320 may be in contact with the injection nozzle 1200 and may serve to fixedly support the injection nozzle 1200, and a remaining region of the guide portion 1320 i.e. circumferential region may serve to provide a passage through which the cooling air moves through the cooling air outlet hole 1310.

According to an embodiment, the injection nozzle 1200 and the side wall 1300 may be formed as separate structures and may be connected to each other by contact and support , or may be formed as an integrated structure by, for example, using a 3D printer.

Referring to FIG. 4, the guide portion 1320 may be formed in a cylindrical shape having its inner diameter is constant from its upstream and to its downstream end. The cooling air outlet hole 1310 may be formed in its circumferential surface/region such that the cooling air is introduced in the radially inward direction toward a central axis (i.e. longitudinal axis) of the injection nozzle 1200. The upstream end of the guide portion 1320 may be closed toward the upstream direction for example by the contact region.

According to an embodiment, the region of the guide portion 1320 (the "circumferential region or portion or part") which is in spaced apart from the injection nozzle 1200 may have a cross-sectional shape same as a cross-sectional shape of the injection nozzle 1200, and may be coaxial such that a uniformly shaped annular space or flow channel or flow path is defined between the injection nozzle 1200 and the guide portion 1320 (more particularly, between circumferential region of the guide portion).

According to an embodiment, the region of the guide portion 1320 (the "contact region or portion or part") which is in contact with the injection nozzle 1200 may have a cross-sectional shape same as a cross-sectional shape of the injection nozzle 1200, such that the injection nozzle 1200 is stably supported by such region of the guide portion 1320.

Without being limited to any specific manufacturing technique, according to an embodiment, the injection nozzle 1200 and the side wall/panel 1300 may be integrally formed i.e. may be formed in one-part form. Without being limited to any specific manufacturing technique, for example according to another embodiment, the injection nozzle 1200 and the side wall including the contact region may be integrally formed i.e. may be formed in one-part form. Alternatively, without being limited to any specific manufacturing technique, the injection nozzle 1200 and the side wall may be formed as separate components and subsequently may be assembled, for example the injection nozzle 1200 may be inserted through the contact region and optionally may be friction-fitted or interference-fitted with the contact region.

An inner end portion (for example the contact region) of the guide portion 1320 may have elasticity.

The contact region of the guide portion 1320 may be configured to elastically support the injection nozzle and/or may apply an elastic force to the injection nozzle 1200 such that the contact region of the guide portion 1320 support the injection nozzle 1200 by such elastic force.

For example, the contact region may be formed with having a thickness relatively lesser than a thickness of the circumferential wall or part or portion of the guide portion 1320, and such that the contact region functions as a spring or elastic element cantilevered at the upstream end of the circumferential wall or part or portion of the guide portion 1320. The contact region may thus have an annular disc shape wherein the outer circumferential wall of the disc is connected to the circumferential wall the guide portion 1320, and the inner circumferential wall of the disc defines a hole or opening or slot or port into which the injection nozzle 1200 is inserted.

The contact region of the guide portion 1320 may be configured to apply an elastic force in a radially inward direction of the injection nozzle 1200 such that the contact region of the guide portion 1320 support the injection nozzle 1200 by such elastic force. For example, but not limited thereto, the contact region may have a non-planar annular disc shape wherein a inner part of the disc encircling the hole (or opening or slot or port) into which the injection nozzle 1200 is inserted is curved, i.e. from the circumferential wall the guide portion 1320 (or from a radial plane perpendicular to the circumferential wall the guide portion 1320) towards the upstream or downstream direction (with respect to longitudinal axis of the injection nozzle 1200). An outer part, of the disc, encircling the inner part of the disc is connected the circumferential wall the guide portion 1320. The curved inner part may be pre-tensioned and thus may apply elastic force to the injection nozzle 1200 in the radially inward direction of the injection nozzle 1200.

Furthermore, as shown in FIG. 6, the plurality of cooling air outlet holes 1310 may be formed in a shape of multiple slits along the longitudinal direction in the upstream end portion of the guide portion 1320. This design may facilitate the contact region of the guide portion 1320 to apply the inward-direction elastic force. Optionally, as shown in FIG 6, the slits may be open toward the upstream direction.

Referring to FIG. 5 and FIG. 6, when the injection nozzle 1200 has a circular tube structure, the guide portion 1320 may be concentric with the injection nozzle 1200. The guide portion 1320 may have a structure in which an inner diameter of the guide portion 1320 is larger than an outer diameter of the injection nozzle 1200.

At this time, a structure of the guide portion 1320 can be implemented in which one region inside the guide portion 1320, i.e., a contact region, protrudes inward so that the contact region is in contact with the injection nozzle 1200. To explain further, the guide portion 1320 may have at least two (integrally formed) parts or portions - a circumferential region or wall or part or portion and a contact part or region or portion. The circumferential region and the contact region may be axially aligned. An inner diameter of the contact region may be smaller than an inner diameter of the circumferential region such that the contact region protrudes radially inwards from the circumferential region. The inner diameter of the contact region may be same as an outer diameter of the injection nozzle 1200. Alternatively, the inner diameter of the contact region may be (slightly) smaller than an outer diameter of the injection nozzle 1200, in a disassembled state or default state (i.e. when the injection nozzle 1200 has not been inserted into the contact part or region or portion). The contact part or region or portion is elastically deformable. The contact part or region or portion is elastically deformed when the injection nozzle 1200 is inserted therein and contacts and holds the injection nozzle 1200 with an elastic force due to being in the elastically deformed state. The inner diameter of the circumferential region may be larger than the outer diameter of the injection nozzle 1200 such that the circumferential region is spaced apart from the injection nozzle 1200.

The contact region may have a longitudinal extension and may be curved inwards to define a concavely shaped space thereinbetween.

The circumferential region, may be downstream of the contact region.

Optionally, the circumferential region, may have a tubular or right circular cylinder shape.

Optionally, the plurality of cooling air outlet holes 1310 may be formed along the longitudinal direction of the contact region. Each of the cooling air outlet holes 1310 may extend longitudinally (slit or strip shape or elongated shape) following a contour of the contact region, for example following the shape of the contact region. This may be one way, but not limited thereto, to provide elasticity to the contact region.

Further optionally, the elongated cooling air outlet holes may start from a point spaced apart (in upstream direction) from the downstream end of the guide portion (end of the guide portion adjacent to the nozzle outlet) and extend upto an upstream end of the guide portion (end of the guide portion opposite/spaced apart to the nozzle outlet), thus making the guide portion resembling a tubular shape with longitudinal slits at the upstream end. This may be another way, but not limited thereto, to provide elasticity to the contact region.

However, other ways of providing elasticity to the contact region may also be used, for example using thickness or shapes or pre-tensioning, etc.

Alternatively or additionally, the plurality of cooling air outlet holes 1310 may be formed along the longitudinal direction of the circumferential region. Optionally, each of the cooling air outlet holes 1310 may extend longitudinally (slit or strip shape or elongated shape) following a contour of the circumferential region,.

In other words, the plurality of cooling air outlet holes 1310 may be formed along the longitudinal direction of the guide portion 1320.

In any of the embodiments, the cooling air outlet holes 1310 may have elongated shapes, and may be disposed (for example parallelly extending) to be spaced apart from each other in a circumferential direction.

The contact region of the guide portion 1320 may have a structure that protrudes radially inward when viewed from the outside of the guide portion 1320, and it is preferable that the cooling air outlet hole 1310 is longer than the region that protrudes inward. In other words, the contact region of the guide portion 1320 may be convexly curved toward the radially inward direction such that the radially innermost point of the contact region of the guide portion 1320 can meet and support the injection nozzle 1200. In the convexly curved contact region, the inner diameter of the contact region, from its upstream end to its downstream end, may decrease and then increase. Specifically, when the guide portion 1320 is assembled with the injection nozzle 1200, the inner diameter of the contact region may decrease from the upstream end of the contact region to the radially innermost point and increase from the radially innermost point to the downstream end of the contact region.

Such a cooling air outlet hole 1310 is formed in a shape of slit along a longitudinal direction of the injection nozzle 1200, and may provide elasticity to the end portion of the guide portion 1320. The guide portion 1320 may be spaced apart from the injection nozzle 1200 forming a space therebetween and the cooling air outlet hole 1310 is in communication with a region, such that the cooling air introduced through the cooling air inlet hole 1110 may flow in the region toward the combustion.

As such, the part of the guide portion having the cooling air outlet hole 1310 may provide elasticity to the guide portion 1320, and also functions as a flow path of cooling air.

When the injection nozzle 1200 is inserted into the guide portion 1320, the plurality of cooling air outlet holes 1310 formed in the end portion of the guide portion 1320 induce elastic deformation at the end portion of the guide portion 1320 while the injection nozzle 1200 is inserted into the guide portion 1320. Accordingly, the assembly of the injection nozzle 1200 may be easily performed, and one region of the guide portion 1320 where the cooling air outlet hole 1310 is formed is in contact with the injection nozzle 1200 and supports the injection nozzle 1200 when the assembly is completed. Cooling air introduced through the cooling air inlet hole 1110 is introduced into a space where the guide portion 1320 and the injection nozzle 1200 are separated along the cooling air outlet hole 1310, so that the end portion of the injection nozzle 1200 may be cooled.

In short, the elastic force may result from any one of or combination of elastically deformable structure of the contact region without any cooling air inlet hole 1110, the contact region made elastically deformed as a result of having the cooling air inlet hole 1110, or any other way described hereinabove, or generally well-known.

As described above, the embodiment of the present disclosure has been described in detail with reference to the accompanying drawings.

Although the embodiments of the present disclosure have been disclosed for illustrative purposes, those skilled in the art will appreciate that various modifications, additions and substitutions are possible, without departing from the scope of the present disclosure. Also, it is noted that any one feature of an embodiment of the present disclosure described in the specification may be applied to another embodiment of the present disclosure. As described above, the configurations and the accompanying drawings disclosed in the present disclosure are provided for describing the present disclosure and are not intended to limit the scope of the present disclosure. The scope of the present disclosure are not limited to the embodiments and the drawings. The scope of the present disclosure is defined by the appended claims.

## Claims

1. A nozzle assembly for discharging fuel and compressed air into a combustion chamber of a combustor of a gas turbine, the nozzle assembly (1000) comprising:
a nozzle body (1100) defining an accommodation space;
a plurality of injection nozzles (1200) disposed in the accommodation space of the nozzle body (1100) and spaced apart from each other, each of the plurality of injection nozzles comprising:
- one or more nozzle inlets for receiving the fuel and a first portion of the compressed air,
- an inner channel for receiving the fuel and the first portion of the compressed air from the one or more nozzle inlets and for flow of the fuel and the first portion of the compressed air therethrough, and
- a nozzle outlet for discharging the fuel and the first portion of the compressed air flowing through the inner channel; and
a side panel (1300) connected to a first side of the nozzle body (1100), wherein the side panel (1300) is a downstream-end panel of the nozzle assembly, and wherein the injection nozzles (1200) pass through the side panel (1300) such that the nozzle outlets of the injection nozzles (1200) are disposed at the side panel (1300),
wherein the nozzle body (1100) comprises a cooling air inlet hole (1110) configured to receive a second portion of the compressed air, as cooling air, therethrough into the accommodation space of the nozzle body (1100) for cooling the plurality of injection nozzles (1200) disposed in the accommodation space of the nozzle body (1000); and
wherein the side panel (1300) comprises at least one cooling air outlet hole (1310) for discharging the cooling air from the accommodation space of the nozzle body (1100), wherein a diameter of each of the at least one cooling air outlet hole (1310) is smaller than a diameter of each of the nozzle outlets;
wherein the side panel (1300) comprises a plurality of guide portions (1320), wherein the number of guide portions corresponds to injection nozzles, and wherein each guide portion (1320) protrudes into the accommodation space of the nozzle body, and a first side of each of the injection nozzles (1200) is inserted into one of the guide portions (1320), the first side comprising the nozzle outlet; and
wherein a cooling air outlet hole (1310) is formed in each of the guide portions (1320) for receiving the cooling air in a space between each of the guide portions (1320) and the first side of the injection nozzle (1200), and wherein each of the guide portions (1320) comprises an outlet for discharging the cooling air from the space between the guide portion (1320) and the first side of the injection nozzle (1200).

2. The nozzle assembly of claim 1, wherein:
a distance of each of the at least one cooling air outlet hole (1310) from the nozzle outlet disposed closest to the cooling air outlet hole (1310) is smaller than a diameter of the nozzle outlet disposed closest to the cooling air outlet hole (1310), and/or
a distance of each of the at least one cooling air outlet hole (1310) from the nozzle outlet disposed closest to the cooling air outlet hole (1310) is smaller than a radius of the nozzle outlet disposed closest to the cooling air outlet hole (1310).

3. The nozzle assembly of claim 1 or 2, wherein each of the at least one cooling air outlet hole (1310) comprises a plurality of cooling air outlet holes (1310) spaced apart from each other and disposed encircling at least one of the nozzle outlets.

4. The nozzle assembly of any one of the preceding claims, wherein the guide portion (1320) comprises a circumferential region, wherein the circumferential region is spaced apart from the outer surface of the injection nozzle (1200) inserted into the guide portion (1320), thereby defining a space between the first side of the injection nozzle (1200) and the circumferential region for flow of the cooling air.

5. The nozzle assembly of claim 4, wherein each of the at least one cooling air outlet hole (1310) is formed in the circumferential region of the guide portion (1320).

6. The nozzle assembly of any one of the preceding claims, wherein each of the guide portions (1320) comprises a contact region configured to be in contact with the injection nozzle (1200) inserted into the guide portion (1320) to support the injection nozzle (1200).

7. The nozzle assembly of claim 6, wherein the contact region of the guide portion (1320) has elasticity.

8. The nozzle assembly of claim 6 or 7, wherein each of the at least one cooling air outlet hole (1310) is formed in the contact region of the guide portion (1320).

9. The nozzle assembly of any one the preceding claims 6 to 8, wherein each of the at least one cooling air outlet hole (1310) comprises a plurality of cooling air outlet holes (1310), and the cooling air outlet holes (1310) are formed in the contact region of the guide portion.

10. The nozzle assembly of any one the preceding claims, wherein each of the at least one cooling air outlet hole (1310) has an elongated shape extending along a longitudinal direction of the guide portion (1320).

11. The nozzle assembly of any one the preceding claims, wherein:
a cross-section of the guide portion (1320) has a shape that is same as a cross-section of the injection nozzles (1200); and/or
each of the guide portions (1320) comprises a contact region configured to be in contact with the injection nozzle (1200) inserted into the guide portion (1320) to support the injection nozzle (1200), and a size or a diameter of the contact region is same as or smaller than a size or a diameter of the injection nozzle (1200) inserted into the guide portion (1320).

12. A combustor (100) for a gas turbine (10), the combustor comprising:
a nozzle casing (110);
a liner (120) connected to the nozzle casing (110), the liner (120) defining a combustion chamber (120a) for combusting a mixture of compressed air and the fuel to generate a combustion gas:
a transition piece (130) connected to the liner (120), the transition piece (130) configured to receive the combustion gas and to supply the combustion gas downstream; and
a nozzle assembly (1000) mounted inside the nozzle casing (110) and configured to discharge the fuel and the compressed air into the combustion chamber,
wherein the nozzle assembly (1000) is according to any one of the preceding claims.

13. A gas turbine comprising:
a compressor (11) configured to receive air from outside and to compress the received air;
a combustor (100) configured to receive the compressed air from the compressor (11) and to receive fuel and to combust a mixture of the compressed air and the fuel to generate a combustion gas; and
a turbine (12) configured to receive the combustion gas generated by the combustor for rotating a turbine rotor of the turbine (12),
wherein the combustor (100) comprises a nozzle assembly according to any one of the preceding claims 1 to 11.

## Patentansprüche

1. Düsenanordnung zum Auslassen von Brennstoff und komprimierter Luft in eine Brennkammer eines Brenners einer Gasturbine, wobei die Düsenanordnung (1000) Folgendes umfasst:
einen Düsenkörper (1100), der einen Aufnahmeraum definiert;
mehrere Einspritzdüsen (1200), die im Aufnahmeraum des Düsenkörpers (1100) angeordnet sind und voneinander beabstandet sind, wobei jede der mehreren Einspritzdüsen Folgendes umfasst:
- einen oder mehrere Düseneinlässe zum Empfangen des Brennstoffs und eines ersten Anteils der komprimierten Luft,
- einen inneren Kanal zum Empfangen des Brennstoffs und des ersten Anteils der komprimierten Luft von dem einen oder den mehreren Düseneinlässen und zum Strömen des Brennstoffs und des ersten Anteils der komprimierten Luft dort hindurch, und
- einen Düsenauslass zum Auslassen des Brennstoffs und des ersten Anteils der komprimierten Luft, die durch den inneren Kanal strömen; und
eine Seitenplatte (1300), die mit einer ersten Seite des Düsenkörpers (1100) verbunden ist, wobei die Seitenplatte (1300) eine Platte des stromabseitigen Endes der Düsenanordnung ist und wobei die Einspritzdüsen (1200) durch die Seitenplatte (1300) verlaufen, derart, dass die Düsenauslässe der Einspritzdüsen (1200) an der Seitenplatte (1300) angeordnet sind,
wobei der Düsenkörper (1100) ein Kühlluft-Einlassloch (1110) umfasst, das konfiguriert ist, einen zweiten Anteil der komprimierten Luft als Kühlluft zum Kühlen der mehreren Einspritzdüsen (1200), die im Aufnahmeraum des Düsenkörpers (1000) angeordnet sind, dort hindurch in den Aufnahmeraum des Düsenkörpers (1100) aufzunehmen; und
wobei die Seitenplatte (1300) mindestens ein Kühlluft-Auslassloch (1310) zum Auslassen der Kühlluft aus dem Aufnahmeraum des Düsenkörpers (1100) umfasst, wobei ein Durchmesser von jedem des mindestens einen Kühlluft-Auslasslochs (1310) kleiner als ein Durchmesser von jedem der Düsenauslässe ist;
wobei die Seitenplatte (1300) mehrere Führungsabschnitte (1320) umfasst, wobei die Anzahl der Führungsabschnitte derjenigen der Einspritzdüsen entspricht und wobei jeder Führungsabschnitt (1320) in den Aufnahmeraum des Düsenkörpers vorsteht und eine erste Seite von jeder der Einspritzdüsen (1200) in einen der Führungsabschnitte (1320) eingesetzt ist, wobei die erste Seite den Düsenauslass umfasst; und
wobei ein Kühlluft-Auslassloch (1310) zum Aufnehmen der Kühlluft in einen Raum zwischen jedem der Führungsabschnitte (1320) und der ersten Seite der Einspritzdüse (1200) in jedem der Führungsabschnitte (1320) gebildet ist und wobei jeder der Führungsabschnitte (1320) einen Auslass zum Auslassen der Kühlluft aus dem Raum zwischen dem Führungsabschnitt (1320) und der ersten Seite der Einspritzdüse (1200) umfasst.

2. Düsenanordnung nach Anspruch 1, wobei:
ein Abstand von jedem des mindestens einen Kühlluft-Auslasslochs (1310) von dem Düsenauslass, der am nächsten am Kühlluft-Auslassloch (1310) angeordnet ist, kleiner ist als ein Durchmesser des Düsenauslasses, der am nächsten am Kühlluft-Auslassloch (1310) angeordnet ist, und/oder
ein Abstand von jedem des mindestens einen Kühlluft-Auslasslochs (1310) von dem Düsenauslass, der am nächsten am Kühlluft-Auslassloch (1310) angeordnet ist, kleiner ist als ein Radius des Düsenauslasses, der am nächsten am Kühlluft-Auslassloch (1310) angeordnet ist.

3. Düsenanordnung nach Anspruch 1 oder 2, wobei jedes des mindestens einen Kühlluft-Auslasslochs (1310) mehrere Kühlluft-Auslasslöcher (1310) umfasst, die voneinander beabstandet sind und derart angeordnet sind, dass sie mindestens einen der Düsenauslässe kreisförmig umgeben.

4. Düsenanordnung nach einem der vorhergehenden Ansprüche, wobei der Führungsabschnitt (1320) einen Umfangsbereich umfasst, wobei der Umfangsbereich von der Außenfläche der Einspritzdüse (1200), die in den Führungsabschnitt (1320) eingesetzt ist, beabstandet ist, wodurch ein Raum zwischen der ersten Seite der Einspritzdüse (1200) und dem Umfangsbereich für eine Strömung der Kühlluft definiert ist.

5. Düsenanordnung nach Anspruch 4, wobei jedes des mindestens einen Kühlluft-Auslasslochs (1310) im Umfangsbereich des Führungsabschnitts (1320) gebildet ist.

6. Düsenanordnung nach einem der vorhergehenden Ansprüche, wobei jeder der Führungsabschnitte (1320) einen Kontaktbereich umfasst, der konfiguriert ist, sich mit der Einspritzdüse (1200), die in den Führungsabschnitt (1320) eingesetzt ist, in Kontakt zu befinden, um die Einspritzdüse (1200) zu tragen.

7. Düsenanordnung nach Anspruch 6, wobei der Kontaktbereich des Führungsabschnitts (1320) Elastizität aufweist.

8. Düsenanordnung nach Anspruch 6 oder 7, wobei jedes des mindestens einen Kühlluft-Auslasslochs (1310) im Kontaktbereich des Führungsabschnitts (1320) gebildet ist.

9. Düsenanordnung nach einem der vorhergehenden Ansprüche 6 bis 8, wobei jedes des mindestens einen Kühlluft-Auslasslochs (1310) mehrere Kühlluft-Auslasslöcher (1310) umfasst und die Kühlluft-Auslasslöcher (1310) im Kontaktbereich des Führungsabschnitts gebildet sind.

10. Düsenanordnung nach einem der vorhergehenden Ansprüche, wobei jedes des mindestens einen Kühlluft-Auslasslochs (1310) eine langgestreckte Form aufweist, die sich entlang einer Längsrichtung des Führungsabschnitts (1320) erstreckt.

11. Düsenanordnung nach einem der vorhergehenden Ansprüche, wobei:
ein Querschnitt des Führungsabschnitts (1320) eine Form aufweist, die dieselbe wie diejenige eines Querschnitts der Einspritzdüsen (1200) ist; und/oder
jeder der Führungsabschnitte (1320) einen Kontaktbereich umfasst, der konfiguriert ist, sich mit der Einspritzdüse (1200), die in den Führungsabschnitt (1320) eingesetzt ist, in Kontakt zu befinden, um die Einspritzdüse (1200) zu tragen, und eine Größe oder ein Durchmesser des Kontaktbereichs derselbe wie oder kleiner als eine Größe oder ein Durchmesser der Einspritzdüse (1200) ist, die in den Führungsabschnitt (1320) eingesetzt ist.

12. Brenner (100) für eine Gasturbine (10), wobei der Brenner Folgendes umfasst:
ein Düsengehäuse (110);
eine Auskleidung (120), die mit dem Düsengehäuse (110) verbunden ist, wobei die Auskleidung (120) eine Brennkammer (120a) zum Verbrennen eines Gemischs aus komprimierter Luft und dem Brennstoff, um ein Verbrennungsgas zu erzeugen, definiert;
ein Übergangsstück (130), das mit der Auskleidung (120) verbunden ist, wobei das Übergangsstück (130) konfiguriert ist, das Verbrennungsgas zu empfangen und das Verbrennungsgas stromabwärts zuzuführen; und
eine Düsenanordnung (1000), die im Inneren des Düsengehäuses (110) angebracht ist und konfiguriert ist, den Brennstoff und die komprimierte Luft in die Brennkammer auszulassen,
wobei die Düsenanordnung eine Düsenanordnung (1000) nach einem der vorhergehenden Ansprüche ist.

13. Gasturbine, die Folgendes umfasst:
einen Kompressor (11), der konfiguriert ist, Luft von außerhalb zu empfangen und die empfangene Luft zu komprimieren;
einen Brenner (100), der konfiguriert ist, die komprimierte Luft vom Kompressor (11) zu empfangen und Brennstoff zu empfangen, um ein Gemisch der komprimierten Luft und des Brennstoffs zu verbrennen, um ein Verbrennungsgas zu erzeugen; und
eine Turbine (12), die konfiguriert ist, das Verbrennungsgas, das durch den Brenner erzeugt wird, zum Drehen eines Turbinenrotors der Turbine (12) zu empfangen,
wobei der Brenner (100) eine Düsenanordnung nach einem der vorhergehenden Ansprüche 1 bis 11 umfasst.

## Revendications

1. Ensemble de buses pour évacuer un combustible et de l'air comprimé dans une chambre de combustion d'un dispositif de combustion d'une turbine à gaz, l'ensemble de buses (1000) comportant :
un corps de buse (1100) définissant un espace de réception ;
une pluralité de buses d'injection (1200) disposées dans l'espace de réception du corps de buse (1100) et espacées les unes des autres, chaque buse de la pluralité de buses d'injection comportant :
- une ou plusieurs entrées de buse pour recevoir le combustible et une première partie de l'air comprimé,
- un canal intérieur pour recevoir le combustible et la première partie de l'air comprimé provenant de la ou des entrées de buse et pour un écoulement du combustible et de la première partie de l'air comprimé à travers celui-ci, et
- une sortie de buse pour évacuer le combustible et la première partie de l'air comprimé s'écoulant à travers le canal intérieur ; et
un panneau latéral (1300) relié à un premier côté du corps de buse (1100), dans lequel le panneau latéral (1300) est un panneau d'extrémité aval de l'ensemble de buses, et dans lequel les buses d'injection (1200) passent à travers le panneau latéral (1300) de telle sorte que les sorties de buse des buses d'injection (1200) sont disposées sur le panneau latéral (1300),
dans lequel le corps de buse (1100) comporte un trou d'entrée d'air de refroidissement (1110) configuré pour recevoir une seconde partie de l'air comprimé, en tant qu'air de refroidissement, à travers celui-ci dans l'espace de réception du corps de buse (1100) pour refroidir la pluralité de buses d'injection (1200) disposées dans l'espace de réception du corps de buse (1000) ; et
dans lequel le panneau latéral (1300) comporte au moins un trou de sortie d'air de refroidissement (1310) pour évacuer l'air de refroidissement à partir de l'espace de réception du corps de buse (1100), dans lequel un diamètre de chacun des au moins un trou de sortie d'air de refroidissement (1310) est inférieur à un diamètre de chacune des sorties de buse ;
dans lequel le panneau latéral (1300) comporte une pluralité de parties de guidage (1320), dans lequel le nombre de parties de guidage correspond à des buses d'injection, et dans lequel chaque partie de guidage (1320) fait saillie dans l'espace de réception du corps de buse, et un premier côté de chacune des buses d'injection (1200) est inséré dans l'une des parties de guidage (1320), le premier côté comportant la sortie de buse ; et
dans lequel un trou de sortie d'air de refroidissement (1310) est formé dans chacune des parties de guidage (1320) pour recevoir l'air de refroidissement dans un espace entre chacune des parties de guidage (1320) et le premier côté de la buse d'injection (1200), et dans lequel chacune des parties de guidage (1320) comporte une sortie pour évacuer l'air de refroidissement à partir de l'espace entre la partie de guidage (1320) et le premier côté de la buse d'injection (1200).

2. Ensemble de buses selon la revendication 1, dans lequel :
une distance de chacun des au moins un trou de sortie d'air de refroidissement (1310) par rapport à la sortie de buse disposée la plus près du trou de sortie d'air de refroidissement (1310) est inférieure à un diamètre de la sortie de buse disposée la plus près du trou de sortie d'air de refroidissement (1310), et/ou
une distance de chacun des au moins un trou de sortie d'air de refroidissement (1310) par rapport à la sortie de buse disposée la plus près du trou de sortie d'air de refroidissement (1310) est inférieure à un rayon de la sortie de buse disposée la plus près du trou de sortie d'air de refroidissement (1310).

3. Ensemble de buses selon la revendication 1 ou 2, dans lequel chacun des au moins un trou de sortie d'air de refroidissement (1310) comporte une pluralité de trous de sortie d'air de refroidissement (1310) espacés les uns des autres et disposés en encerclant au moins l'une des sorties de buse.

4. Ensemble de buses selon l'une quelconque des revendications précédentes, dans lequel la partie de guidage (1320) comporte une zone circonférentielle, dans lequel la zone circonférentielle est espacée de la surface extérieure de la buse d'injection (1200) insérée dans la partie de guidage (1320), en définissant ainsi un espace entre le premier côté de la buse d'injection (1200) et la zone circonférentielle pour un écoulement de l'air de refroidissement.

5. Ensemble de buses selon la revendication 4, dans lequel chacun des au moins un trou de sortie d'air de refroidissement (1310) est formé dans la zone circonférentielle de la partie de guidage (1320).

6. Ensemble de buses selon l'une quelconque des revendications précédentes, dans lequel chacune des parties de guidage (1320) comporte une zone de contact configurée pour être en contact avec la buse d'injection (1200) insérée dans la partie de guidage (1320) pour supporter la buse d'injection (1200).

7. Ensemble de buses selon la revendication 6, dans lequel la zone de contact de la partie de guidage (1320) a une élasticité.

8. Ensemble de buses selon la revendication 6 ou 7, dans lequel chacun des au moins un trou de sortie d'air de refroidissement (1310) est formé dans la zone de contact de la partie de guidage (1320).

9. Ensemble de buses selon l'une quelconque des revendications 6 à 8 précédentes, dans lequel chacun des au moins un trou de sortie d'air de refroidissement (1310) comporte une pluralité de trous de sortie d'air de refroidissement (1310), et les trous de sortie d'air de refroidissement (1310) sont formés dans la zone de contact de la partie de guidage.

10. Ensemble de buses selon l'une quelconque des revendications précédentes, dans lequel chacun des au moins un trou de sortie d'air de refroidissement (1310) a une forme allongée s'étendant le long d'une direction longitudinale de la partie de guidage (1320).

11. Ensemble de buses selon l'une quelconque des revendications précédentes, dans lequel :
une section transversale de la partie de guidage (1320) a une forme qui est identique à une section transversale des buses d'injection (1200) ; et/ou
chacune des parties de guidage (1320) comporte une zone de contact configurée pour être en contact avec la buse d'injection (1200) insérée dans la partie de guidage (1320) pour supporter la buse d'injection (1200), et un diamètre ou une taille de la zone de contact est identique ou inférieur à un diamètre ou une taille de la buse d'injection (1200) insérée dans la partie de guidage (1320).

12. Dispositif de combustion (100) pour une turbine à gaz (10), le dispositif de combustion comportant :
un carter de buse (110) ;
une chemise (120) reliée au carter de buse (110), la chemise (120) définissant une chambre de combustion (120a) destinée à brûler un mélange d'air comprimé et du combustible afin de générer un gaz de combustion ;
une pièce de transition (130) reliée à la chemise (120), la pièce de transition (130) étant configurée pour recevoir le gaz de combustion et pour fournir le gaz de combustion en aval ; et
un ensemble de buses (1000) monté à l'intérieur du corps de buse (110) et configuré pour évacuer le combustible et l'air comprimé dans la chambre de combustion,
dans lequel l'ensemble de buses (1000) est selon l'une quelconque des revendications précédentes.

13. Turbine à gaz comportant :
un compresseur (11) configuré pour recevoir de l'air provenant de l'extérieur et pour comprimer l'air reçu ;
un dispositif de combustion (100) configuré pour recevoir l'air comprimé provenant du compresseur (11) et pour recevoir du combustible et pour brûler un mélange de l'air comprimé et du combustible afin de générer un gaz de combustion ; et
une turbine (12) configurée pour recevoir le gaz de combustion généré par le dispositif de combustion pour faire tourner un rotor de turbine de la turbine (12),
dans laquelle le dispositif de combustion (100) comporte un ensemble de buses selon l'une quelconque des revendications 1 à 11 précédentes.
